Europäisches Patentamt

European Patent Office

Office européen des brevets

(11) Numéro de publication: **0 165 837**
**B1**

(12) **FASCICULE DE BREVET EUROPEEN**

(45) Date de publication du fascicule du brevet: **11.07.90**

(51) Int. Cl.⁵: **G 02 B 6/38**

(21) Numéro de dépôt: **85400917.2**

(22) Date de dépôt: **10.05.85**

(54) **Procédé de blocage mécanique d'un élément intérieur dans un corps extérieur et application de ce procédé à la réalisation d'un embout de connecteur de fibre optique.**

(30) Priorité: **11.05.84 FR 8407300**

(43) Date de publication de la demande:
**27.12.85 Bulletin 85/52**

(45) Mention de la délivrance du brevet:
**11.07.90 Bulletin 90/28**

(84) Etats contractants désignés:
**CH DE FR GB IT LI SE**

(56) Documents cités:
**EP-A-0 104 882**
**DE-A-2 611 168**
**DE-A-2 737 029**
**FR-A-2 528 587**
**JP-A-0 163 046**
**US-A-3 954 338**

(73) Titulaire: **RADIALL INDUSTRIE, Société Anonyme dite:**
**101, rue Philibert Hoffmann Zone Industrielle Ouest**
**F-93116 Rosny-Sous-Bois (FR)**

(72) Inventeur: **Despouys, Jean-Bernard**
**4, rue Frédéric Mistral**
**F-75015 Paris (FR)**

(74) Mandataire: **Nony, Michel**
**Cabinet Nony 29, rue Cambacérès**
**F-75008 Paris (FR)**

Courier Press, Leamington Spa, England.

Description

La présente invention est relative à un procédé de blocage mécanique d'un élément intérieur, notamment cylindrique, dans un corps extérieur, notamment tubulaire, permettant un ajustement ultérieur de la position de l'élément intérieur par microdéplacements sous l'action d'organes de manoeuvre introduits dans des trous radiaux du corps extérieur. Le procédé selon la présente invention est utilisable pour immobiliser une fibre optique dans un embout de connecteur, l'élément intérieur étant alors de préférence un élément cylindrique tubulaire, de préférence métallique, en particulier en acier, à l'intérieur duquel la fibre optique est immobilisée en particulier par collage, le corps extérieur étant alors un corps d'embout. Des connecteurs pour lesquels peut être mise en oeuvre la présente invention ainsi que leurs procédés de réglage sont décrits dans les demandes de brevet français FR—A—2,524,988 et FR—A—2,543,630 de la société déposante.

Dans la demande de brevet français FR—A—2,524,988 il est décrit un connecteur pour fibres optiques mettant en oeuvre, à titre de moyen de blocage mécanique, une pluralité de billes montées à force dans les trous radiaux du corps d'embout et venant en appui contre l'élément intérieur tubulaire dans lequel doit être mise en place une fibre optique.

Dans la demande de brevet français FR—A—2,543,630, il est décrit à titre de moyen de blocage mécanique, des pièces déformables engagées dans les trous radiaux du corps extérieur, de préférence en un métal mou, qui sont comprimées et déformées à l'aide de poinçons de façon à remplir l'espace libre existant dans la zone des trous radiaux entre la périphérie de l'élément intérieur et la paroi en regard du corps extérieur.

Comme décrit dans les demandes de brevet précitées, une fois l'élément intérieur bloqué mécaniquement dans le corps extérieur, on provoque par action mécanique, à l'aide d'organes de manoeuvre, tels que des poinçons, sur les billes ou le noyau métallique formé par écrasement des pièces déformables, des micro-déplacements par flexion de l'élément intérieur par rapport au corps extérieur permettant de régler la position de l'extrémité d'une fibre optique mise en place dans l'élément intérieur par rapport à l'axe du corps extérieur.

Bien que donnant dans l'ensemble satisfaction, les procédés de blocage mécanique décrits dans les demandes antérieurs présentent cependant l'inconvénient que, du fait du serrage des billes dans les trous radiaux du corps extérieur ou de l'élasticité du métal du noyau déformable, une légère instabilité, en pratique néanmoins inférieure à 2 μm apparaît occasionnellement après réglage.

De plus, en fonction du réglage l'angle d'inclinaison de la fibre sur l'axe du connecteur varie de même que la distance de la face d'extrémité de la fibre par rapport à la portée du corps d'embout dont fait saillie la fibre maintenue dans l'élément intérieur, cette portée de préférence conique, coopérant, comme décrit dans les demandes antérieures, avec une portée sphérique d'un corps de butée pour l'alignement des fibres à connecter.

Le brevet US 3.954.338 décrit par ailleurs un procédé de positionnement radial d'une fibre optique contenue dans un élément intérieur dans un corps de connecteur à l'aide de vis de réglage radiales.Une gaine élastique est interposée entre le corps de connecteur et un manchon entourant l'élément intérieur. Du fait du je entre l'élément intérieur et le manchon et de l'élasticité de la gaine solidarisant le manchon au corps extérieur, on obtient une certaine imprécision en ce qui concerne le positionnement radial de la fibre et une certaine instabilité dans le temps du réglage effectué.

La présente invention se propose de fournir un procédé de réalisation d'un embout de connecteur de fibres optiques permettant d'assurer un blocage mécanique de l'élément intérieur dans le corps extérieur, qui soit d'une mise en oeuvre simple et rapide, et qui permette un réglage précis et particulièrement stable dans le temps du positionnement de la fibre optique dans le corps extérieur.

Les caractéristiques de l'invention sont l'objet de la revendication 1.

De préférence on exerce l'appui élastique par un ressort hélicoïdal de compression prenant appui, d'une part sur une portée du noyau et d'autre part sur une paroi constituant la face arrière de l'évidement, la face frontale de l'évidement étant constituée par la portée plane en appui sur laquelle est amenée la portée plane du noyau.

De préférence et comme dans les demandes de brevet antérieures de la société déposante mentionnées ci-dessus, il est prévu quatre trous radiaux équiangulairement répartis en forme de croix dans le corps extérieur.

Les opérations de réglage sont analogues à celles amplement décrites dans FR—A—2524988 et FR—A—2543630 et ne seront par rappelées en détail ici.

Selon une caractéristique de l'invention, l'action des organes de manoeuvre sous forme de vis micrométriques engagées dans les trous radiaux, provoque par appui sur la portée périphérique en regard du noyau des glissements plan sur plan des portées planes en appui mutuel du noyau solidaire de l'élément intérieur et de l'évidement du corps d'embout.

La fibre au cours de ces opérations de réglage n'est ainsi soumise qu'à des translations transversales et conserve par conséquent son alignement angulaire par rapport à l'axe du connecteur.

De plus les réglages à effectuer sont de faible amplitude et le rappel élastique transversal du ressort appliquant frontalement le noyau sur la portée du corps d'embout est négligeable devant la pression de contact axiale au niveau des portées en regard. Les contraintes mécaniques résultantes sont ainsi normales à la surface d'appui mutuel et ne risquent pas de destabiliser le réglage dans le temps.

Enfin, l'état de surface des portées en regard, qui peuvent être usinées avec une grande précision, est tel que la précision de déplacement du noyau solidaire de l'élément intérieur par rapport au corps extérieur est de l'ordre de quelques dizièmes de micromètre.

Une fois les opérations de réglage effectuées, on peut immobiliser définitivement l'élément intérieur dans le corps extérieur par introduction d'une masse de collage, telle qu'une résine dans les trous radiaux du corps extérieur.

Dans le but de mieux faire comprendre l'invention on va maintenant en décrire à titre d'exemple en aucune manière limitatif des modes de réalisation particuliers en se référant au dessin annexé dans lequel:

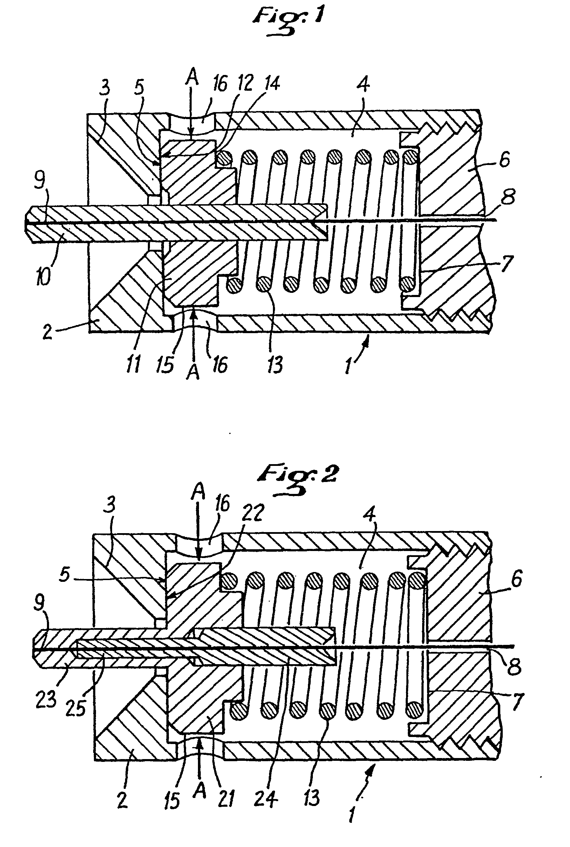

—la figure 1 est une vue en coupe de l'extrémité d'un corps d'embout de connecteur réalisé en mettant en oeuvre le procédé selon l'invention.

—la figure 2 est une vue analogue à la figure 1 d'un second mode de réalisation.

On a illustré sur le dessin la mise en oeuvre du procédé selon l'invention appliqué à la réalisation d'un embout mâle de connecteur.

L'embout désigné globalement par 1 présente un corps 2 dont l'extrémité comporte un évidement annulaire présentant une paroi de cavité de forme conique 3.

Le corps 2 comporte un évidement longitudinal 4 réalisé à partir d'une portée plane 5 perpendiculaire à l'axe longitudinal du corps 2.

L'évidement 4 est fermé à sa partie arrière par une pièce 6 solidarisée par vissage du corps 2 et présentant une paroi 7 perpendiculaire à l'axe du corps, la pièce 6 présentant un conduit axial 8 pour le passage d'une fibre optique 9.

Comme on le voit sur le dessin la fibre optique 9 est mise en place dans un élément cylindrique tubulaire métallique 10 comportant un conduit axial pour la réception de la fibre. La fibre 9 est immobilisée dans l'élément intérieur 10, de préférence par collage d'extrémité.

Auparavant on a mis en place et solidarisé, de préférence par soudure, autour de l'élément 10 un noyau rigide 11 présentant une portée frontale plane 12 susceptible de venir en appui plan sur plan contre la portée 5 du corps 2, et étant pressée à force contre celle-ci par un ressort hélicoïdal 13 comprimé entre une portée arrière 14 du noyau 11 et la paroi 7 de la pièce arrière 6.

Dans la position de blocage illustrée, une portée périphérique 15 du noyau se trouve en regard de trous radiaux 16, de préférence au nombre de quatre, équiangulairement répartis, traversant la paroi du corps 2.

On comprend que dans la position de blocage illustrée il est possible par action sur des vis micrométriques (non représentées dans le sens des flèches A de provoquer des micro-déplacements du noyau 11, et donc de la fibre 9 immobilisée dans l'élément intérieur 10 solidaire du noyau, par rapport au corps 2 de façon à réaliser les opérations de réglage du connecteur décrites dans les deux demandes antérieures de la société déposante mentionnées précédemment.

Une fois les opérations de réglage terminées, il est possible d'assurer l'immobilisation définitive de la fibre dans l'embout par injection d'une résine par les trous radiaux 16 dans l'évidement 4 de façon à enrober le noyau 11 et le solidariser du corps 2.

Selon l'invention, on peut réaliser la connexion de fibres optiques monomode avec une précision de positionnement de la fibre inférieur à 0,5 µm, cette précision étant maintenue de façon remarquablement stable dans le temps.

Une telle stabilité de précision peut être encore favorisée avec le montage du mode de réalisation de la figure 2, dans lequel le noyau qui comporte un corps 21 muni d'une portée de référence plane 22 présente un prolongement axial 23. L'élément intérieur 24 dans ce mode de réalisation présente un prolongement axial 25 s'engageant dans un évidement du prolongement 23 du noyau.

Ainsi, la protubérance axiale dans l'évidement frontal conque 3, est réalisée d'une seul tenant avec le corps du noyau et non plus comme dans le premier mode de réalisation sous forme d'une pièce séparée 10 solidaire par soudure du noyau. On obtient dans ce cas une plus grande stabilité mécanique lors de variations de température.

## Revendications

1. Procédé de réalisation d'un embout de connecteur de fibres optiques comportant un corps (2) extérieur tubulaire, un élément intérieur cylindrique (10, 24, 25) apte à recevoir une fibre optique (8), un noyau rigide (11) immobilisé autour de l'élément intérieur (10) et comportant une portée plane (14) perpendiculaire à l'axe longitudinal de l'élément intérieur en appui axial élastique (13) contre une portée plane (5) perpendiculaire à l'axe longitudinal dudit corps, caractérisé par les étapes suivantes:

a) on met en place ledit élément intérieur (10, 24, 25) dans ledit corps extérieur (2) de manière qu'une portée périphérique (15) du noyau (11; 21, 23) soit disposée en regard de trous radiaux (16) du corps extérieur (2);

b) on met en place dans l'élément intérieur (10, 24, 25) une fibre optique (9) que l'on immobilise, de préférence par collage d'extrémité;

c) on introduit de l'extérieur dans les trous radiaux (16) dudit corps extérieur (2) des organes de manoeuvre au contact de ladite portée périphérique (15) du nogau, pour amener par micro-déplacements l'élément intérieur contenant la fibre optique jusqu'à la position de réglage désirée dans le corps extérieur; et

d) on retire les organes de manoeuvre.

2. Procédé selon la revendication 1, caractérisé par le fait qu'on exerce ledit appui élastique par un ressort hélicoïdal de compression (13) prenant appui d'une part sur une portée (14) dudit noyau et d'autre part sur une paroi (7) constituant la face arrière de l'évidement.

**Patentansprüche**

1. Verfahren zur Herstellung eines Endstücks eines Verbinders von optischen Fasern mit einem rohrförmigen äußeren Körper (2), einem inneren zylindrischen Element (10, 24, 25), das geeignet ist, eine optische Faser (8) aufzunehmen, einem starren Kern (11), der unbeweglich um das innere Element (10) gemacht ist und eine ebene Auflagefläche (12) aufweist, die senkrecht zur Längsachse des inneren Elements in axialelastischem Andruck (13) gegen eine ebene Auflagefläche (5) verläuft, de senkrecht zur Längsachse des genannten Körpers verläuft, gekennzeichnet durch die folgenden Schritte:

a) Anordnen des genannten inneren Elements (10, 24, 25) in dem äußeren Körper (2) derart, daß eine Umfangsauflagefläche (15) des Kerns (11, 21, 23) gegenüber von radialen Löchern (16) des äußeren Körpers (2) angeordnet ist;

b) Anordnen einer optischen Faser (9) in dem inneren Element (10, 24, 25), die unbeweglich gemacht wird, vorzugsweise durch Kleben des Endes;

c) Einführen von außen in die radialen Löcher (16) des äußeren Körpers (2) von Betätigungsorganen in Kontakt mit der genannten Umfangsauflagefläche (15) des Kerns, um durch Mikroverschiebungen das innere Element, das die optische Faser enthält, biz zu der gewünschten Regelungsstellung in den äußeren Körper zu bringen; und

d) Zurückziehen der Betätigungsorgane.

2. Verfahren nach Anspruch 1, dadurch gekennzeichnet, daß der genannte elastische Andruck durch eine Schrauben-Druckfeder (13) ausgeübt wird, die einerseits sich auf einer Auflagefläche (14) des genannten Kerns und andererseits auf einer Seitenwand (7) abstützt, die die Rückseite der Ausnehmung bildet.

**Claims**

1. Process for producing an end fitting for a fibre optic connector having a tubular external body (2), cylindrical internal element (10, 24, 25) able to receive an optical fibre (8), a rigid core (11) immobilized around the internal element (10) and having a planar bearing face (14) perpendicular to the longitudinal axis of the internal element and axially elastically bearing (13) against a planar bearing face (5) perpendicular to the longitudinal axis of said body, characterized by the following stages:

a) the internal element (10, 24, 25) is placed in the external body (2) in such a way that a peripheral bearing face (15) of the core (11; 21, 23) is located facing the radial holes (16) of the external body (2),

b) an optical fibre (9) is placed in the internal element (10, 24, 25) and is immobilized, preferably by bonding the end,

c) from the outside are introduced into the radial holes (16) of said external body (2) control members in contact with said peripheral bearing surface (15) of the core, so as, by microdisplacements, to bring the internal element containing the optical fibre up to the desired setting position in the external body and

d) the control members are removed.

2. Process according to claim 1, characterized in that the said elastic bearing effect is exerted by a helical compression spring (13) bearing on the one hand on a bearing surface (14) of said core and on the other hand on a wall (7) constituting the rear face of the recess.

*Fig. 1*

*Fig. 2*